# EUROPEAN PATENT APPLICATION

(11) **EP 1 055 820 A1**
(43) Date of publication of application: **29.11.2000**
(21) Application number: 00110281.3
(22) Date of filing: 15.05.2000
(51) Int. Cl.: F04C 18/02, F04C 29/02

(54) **Scroll machine lubrication system**

(30) Priority: 26.05.1999 JP 14725999
(71) Applicant: Mitsubishi Heavy Industries, Ltd., Tokyo (JP)
(72) Inventor: Hirooka, Katsumi, c/o Mitsubishi Heavy Ind., Ltd., Nishi-kasugai-gun, Aichi-ken (JP); Kimata, Yoshiyuki, c/o Mitsubishi Heavy Ind., Ltd., Nishi-kasugai-gun, Aichi-ken (JP)
(74) Representative: Dr. Weitzel & Partner

(57) **Abstract**

A fluid machine is disclosed, in which the motor is sufficiently cooled even if the amount of circulation of the refrigerant gas is smaller. The fluid machine comprises a stator (110b); a rotation shaft (105); a rotor (110c) which is fixed to the rotation shaft and rotates according to the rotation of the rotation shaft; and an oil filler path through which lubricating oil flows, the oil filler path being provided in the rotation shaft and having a stator opening (155c) which faces the stator.

## Description

### BACKGROUND OF THE INVENTION

### 1. Field of the Invention

The present invention relates to a fluid machine including a motor, such as a scroll-type compressor.

This application is based on Patent Application No. Hei 11-147259 filed in Japan, the contents of which are incorporated herein by reference.

### 2. Description of the Related Art

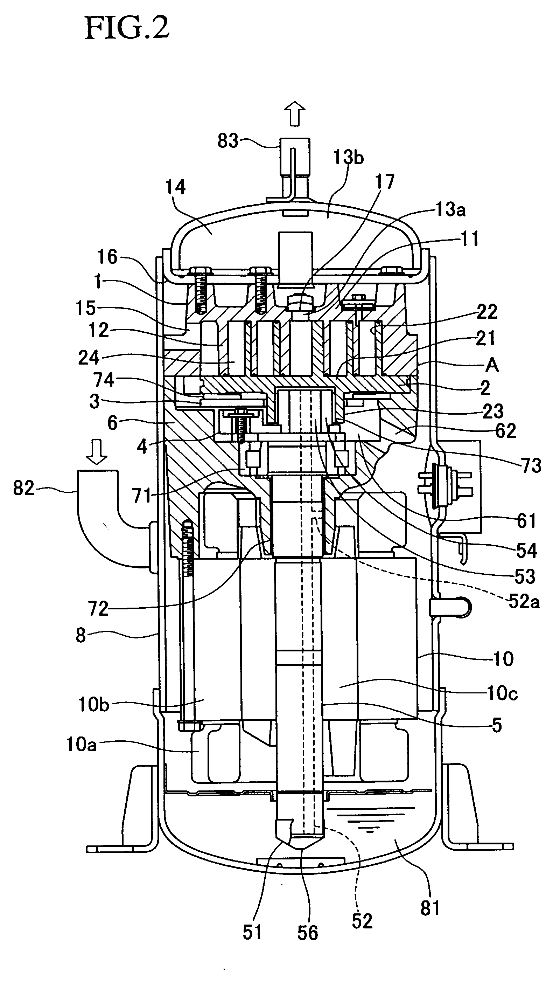

Fig. 2 shows an example of a conventional scroll-type compressor (fluid machine).

In the figure, the upper portion of closed housing 8 includes a scroll-type compressing mechanism A, while the lower portion of the housing includes a motor 10, and the compressing mechanism A and motor 10 are combined with each other via rotation shaft 5.

The motor 10 comprises stator 10b having coil 10a, and rotor 10c which is provided inside the stator 10b and is fixed to the rotation shaft 5.

The scroll-type compressing mechanism A comprises fixed scroll 1; revolving scroll 2; Oldham ring 3 for permitting the revolving scroll 2 to revolve, but prohibiting the rotation of the scroll 2; frame 6 for fastening the fixed scroll 1 and the motor 10; rotation shaft 5; and upper bearing 71 and lower bearing 72 for supporting the rotation shaft 5.

The fixed scroll 1 comprises end plate 11 and spiral lap 12 disposed on a surface of the plate 11, the surface facing end plate 21 explained later. A suction hole 15 is provided in the outer peripheral wall of the fixed scroll 1. In addition, a discharge opening 13a is provided in the center portion of the end plate 11, and a discharge valve 17 for opening/closing the discharge opening 13a is also provided. Furthermore, a discharge cover 16 is provided, which has a discharge opening 13b coupled and communicating with the discharge opening 13a.

The revolving scroll 2 comprises end plate 21 and spiral lap 22 which is disposed on a surface of the plate 21, the surface facing the end plate 11. A boss 23 is provided on (or projects from) the lower and outer surface of the end plate 21. A freely-rotatable eccentric bush 54 is inserted in the boss 23 via a bearing 73. In addition, an eccentric pin 53, projecting from the upper end of the rotation shaft 5, is inserted in a hole provided in the eccentric bush 54. A plurality of enclosed spaces 24 are generated by engaging the fixed scroll 1 and the revolving scroll 2 in a manner such that the axes of these scrolls are eccentrically separated from each other by a predetermined distance (that is, in an eccentric form), and the phases of these scrolls differ from each other by 180°.

The frame 6 is fixed to the closed housing 8, and a thrust bearing 74 is provided on the upper face of the frame 6 so as to support the revolving scroll 2. In addition, (the volume of) a cylindrical opening provided in the center area of the upper face of the frame 6 is limited by the back face of the revolving scroll 2, thereby forming an oil chamber 61. An oil drain hole 62 is provided in the lower portion of the cylindrical wall of the oil chamber 61.

An oil filler path 52 is eccentrically provided in the rotation shaft 52, and a cap 51 is attached to the lower end of the rotation shaft 5. A suction inlet 56 is provided in the lower portion of the cap 51. The lower end of the oil filler path 52 is communicated with the suction inlet 56, while the upper end thereof is open at the upper face side of the eccentric pin 53.

A balance weight 4 is attached to the eccentric bush 54 so as to absorb the eccentric momentum of the scroll-type compressing mechanism A.

In addition, (i) a suction pipe 82 through which a refrigerant gas is supplied, and (ii) a discharge pipe 83 for discharging the refrigerant gas are attached to the closed housing 8, and the lower portion of the housing 8 functions as oil chamber 81 as shown in Fig. 2.

When the motor 10 is driven, revolving scroll 2 is driven via a revolving mechanism consisting of the rotation shaft 5, eccentric pin 53, eccentric bush 54, boss 20, etc. The revolving scroll 2 revolves along a circular orbit having a radius of revolution, while rotation of the scroll 2 is prevented by the Oldham ring 3. According to the revolving motion, the refrigerant gas is drawn from the outside of the scroll-type compressor into the closed housing 8 via the suction pipe 82, and passes through a refrigerant gas path (not shown) provided in the frame 6, and is supplied to the enclosed spaces 24 via the suction hole 15. The capacity of the enclosed spaces 24 gradually decreases according to the revolving motion of the revolving scroll 2, and the refrigerant gas approaches and reaches the center part of this scroll mechanism while the gas is gradually compressed according to the above decrease of the capacity. The refrigerant gas then opens the discharge valve 17 in the discharge opening 13a and flows into the discharge cavity 14, and is then discharged outside via the discharge pipe 83.

In the above structure, according to the rotation of the rotation shaft 5, the refrigerating machine oil stocked in the oil chamber 81 is sucked by the pumping action of the oil filler path 52 (provided in the rotation shaft 5) using the centrifugal force. A portion of the sucked oil is introduced through an introducing path 52a, provided in the middle of the oil filler path 52, into the lower bearing 72, and the other portion flows out from the opening at the upper face side of the eccentric pin 53 and is stocked in the oil chamber 61, thereby lubricating each bearing. In addition, a portion of the oil drops through the oil drain hole 62 onto the upper portion of the motor 10, thereby cooling the motor 10.

In the above-explained scroll-type compressor, coil 10a of motor 10 is heated when the motor is driven, but when the refrigerant gas sucked through the suction pipe 82 is drawn via the suction hole 15 into the enclosed spaces 24, the refrigerant gas also passes around the motor 10, thereby cooling the motor 10.

However, if the refrigerating load is decreased and thus the amount of circulation of the refrigerant gas becomes smaller in the driving condition, the amount of suction of the refrigerant gas is also decreased. Accordingly, the cooling effect using the refrigerant gas is insufficient and the temperature of the coil 10a of motor 10 rises, so that the motor 10 may be damaged by overheating. The upper portion of coil 10a is also cooled by refrigerating machine oil dripping from the oil drain hole 62; however, the lower portion of coil 10a receives no or very little refrigerating machine oil so that a significant cooling effect cannot be expected. Therefore, the lower portion of coil 10a of motor 10 may be damaged by overheating.

### SUMMARY OF THE INVENTION

In consideration of the above circumstances, an object of the present invention is to provide a fluid machine in which the motor is sufficiently cooled even if the amount of circulation of the refrigerant gas is smaller.

Accordingly, the present invention provides a fluid machine comprising: a stator; a rotation shaft; a rotor which is fixed to the rotation shaft and rotates according to the rotation of the rotation shaft; and an oil filler path through which lubricating oil flows, the oil filler path being provided in the rotation shaft and having a stator opening which faces the stator.

In the above fluid machine, the lubricating oil flows through the oil filler path according to the rotation of the rotation shaft, and the oil is discharged and supplied to the stator from the stator opening. This discharged lubricating oil cools the stator; thus, the stator can be sufficiently cooled even if the amount of circulation of the refrigerant gas is decreased.

Typically, the oil filler path includes: a first path for supplying the lubricating oil to a bearing of the rotor; and a second path, having the stator opening which faces the stator, for supplying the lubricating oil to the stator.

In this structure, separate paths for supplying the lubricating oil to the bearing and to the stator are provided; thus, the lubricating oil can be supplied to the stator while the lubricating oil is reliably supplied to the bearing.

According to the present invention having the above-explained features, it is possible to prevent the motor in the fluid machine from being damaged by overheating.

### BRIEF DESCRIPTION OF THE DRAWINGS

Fig. 1 is a sectional view of the scroll-type compressor, an embodiment according to the present invention, in the longitudinal direction.
Fig. 2 is a sectional view of a conventional scroll-type compressor in the longitudinal direction.

### DESCRIPTION OF THE PREFERRED EMBODIMENTS

An embodiment of the present invention will be explained in detail.

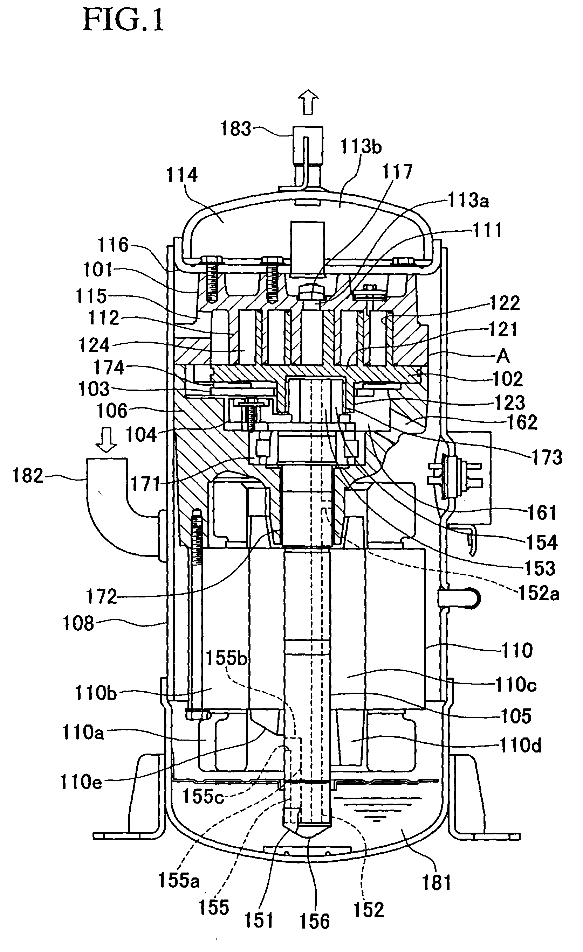

Fig. 1 is a sectional view of the scroll-type compressor (i.e., fluid machine according to the present invention) in the longitudinal direction.

In Fig. 1, the upper portion of closed housing 108 includes a scroll-type compressing mechanism A, while the lower portion of the housing includes a motor 110, and the compressing mechanism A and motor 110 are combined with each other via rotation shaft 105.

The motor 110 comprises stator 110b having coil 110a, and rotor 110c which is provided inside the stator 110b and is fixed to the rotation shaft 105. The rotor 110c also has permanent magnet 110d whose height is substantially the same as that of the coil 110a.

The scroll-type compressing mechanism A comprises fixed scroll 101; revolving scroll 102; Oldham ring 103 for permitting the revolving scroll 102 to revolve, but preventing the rotation of the scroll 102; frame 106 for fastening the fixed scroll 101 and the motor 110; rotation shaft 105; and upper bearing 171 and lower bearing 172 for supporting the rotation shaft 105.

The fixed scroll 101 comprises end plate 111 and spiral lap 112 disposed on a surface of the plate 111, the surface facing end plate 121 explained later. A suction hole 115 is provided in the outer peripheral wall of the fixed scroll 101. In addition, a discharge opening 113a is provided in the center portion of the end plate 111, and a discharge valve 117 for opening/closing the discharge opening 113a is also provided. Furthermore, a discharge cover 116 is provided, which has a discharge opening 113b coupled and communicating with the discharge opening 113a.

The revolving scroll 102 comprises end plate 121 and spiral lap 122 which is disposed on a surface of the plate 121, the surface facing the end plate 111. A boss 123 is provided on (or projects from) the lower and outer surface of the end plate 121. A freely-rotatable eccentric bush 154 is inserted in the boss 123 via a bearing 173. In addition, an eccentric pin 153, projecting from the upper end of the rotation shaft 105, is inserted in a hole provided in the eccentric bush 154. A plurality of enclosed spaces 124 are generated by engaging the fixed scroll 101 and the revolving scroll 102 in a manner such that the axes of these scrolls are eccentrically separated from each other by a predetermined distance (that is, in an eccentric form), and the phases of these scrolls differ from each other by 180°.

The frame 106 is fixed to the closed housing 108, and a thrust bearing 174 is provided on the upper face of the frame 106 so as to support the revolving scroll 102. In addition, (the volume of) a cylindrical opening provided in the center area of the upper face of the frame 106 is limited by the back face of the revolving scroll 102, thereby forming an oil chamber 161. An oil drain hole 162 is provided in the lower portion of the cylindrical wall of the oil chamber 161.

A cap 151 is attached to the lower end of the rotation shaft 105. A suction inlet 156 is provided in the lower portion of the cap 151.

In addition, (i) a suction pipe 182 through which a refrigerant gas is supplied, and (ii) a discharge pipe 183 for discharging the refrigerant gas are attached to the closed housing 108, and the lower portion of the housing 8 functions as oil chamber 181 for stocking the refrigerating machine oil (i.e., lubricating oil), as shown in Fig. 1.

Two oil filler paths 152 (for supplying oil to the bearings) and 155 (for supplying oil to the stator) are eccentrically provided in the rotation shaft 105. The lower end of each of the oil filler paths 152 and 155 is communicated with the suction inlet 156. The other end of the oil filler path 152 reaches the upper face of the eccentric pin 153 which projects from the upper end of the rotation shaft 105, thereby realizing a path for introducing the refrigerating machine oil to the oil chamber 161.

An introducing path 152a is provided in the middle of the oil filler path 152, the path 152a opens towards the outer peripheral side of the rotation shaft 105 so as to supply oil to the lower bearing 172.

The oil filler path 155 consists of introducing path 155b which comprises longitudinal opening 155a is parallel with the axis of the rotation shaft, and opening 155c (corresponding to the stator opening of the present invention) communicated with the upper end of the longitudinal opening 155a. The opening 155c is arranged from the said upper end of the rotation shaft towards the outer peripheral face of the shaft, that is, the open position of the opening 155c faces the lower portion of coil 110a of motor 110. The permanent magnet 110d is provided around the rotation shaft 105; however, notch 110e is provided in the magnet 110d; thus, the above open position faces the lower portion of the coil 110a of motor 110 via the notch.

A balance weight 104 is attached to the eccentric bush 154 so as to absorb the eccentric momentum of the scroll-type compressing mechanism A.

When the motor 110 is driven, revolving scroll 102 is driven via a revolving mechanism consisting of the rotation shaft 105, eccentric pin 153, eccentric bush 154, boss 120, etc. The revolving scroll 102 revolves along a circular orbit having a radius of revolution, while rotation of the scroll 102 is prevented by the Oldham ring 103. According to the revolving motion, the refrigerant gas is drawn from the outside of the scroll-type compressor into the closed housing 108 via the suction pipe 182, and passes through a refrigerant gas path (not shown) provided in the frame 106, and is supplied to the enclosed spaces 124 via the suction hole 115. The capacity of the enclosed spaces 124 gradually decreases according to the revolving motion of the revolving scroll 102, and the refrigerant gas approaches and reaches the center part of this scroll mechanism while the gas is gradually compressed according to the above decrease of the capacity. The refrigerant gas then opens the discharge valve 117 in the discharge opening 113a and flows into the discharge cavity 114, and is then discharged outside via the discharge pipe 183.

According to the rotation of the rotation shaft 105, the refrigerating machine oil stocked in the oil chamber 181 is sucked by the pumping action of the oil filler paths 152 and 155 (provided in the rotation shaft 5) using the centrifugal force. A portion of the refrigerating machine oil sucked via the oil filler path 152 is introduced through the introducing path 152a, provided in the middle of the oil filler path 152, into the lower bearing 172, and the other portion flows out from the opening at the upper face side of the eccentric pin 153 and is stocked in the oil chamber 161, thereby lubricating each bearing. In addition, a portion of the oil drops through the oil drain hole 162 onto the motor 110, thereby cooling the motor 110.

The refrigerating machine oil sucked via the oil filler path 155 is discharged towards the lower portion of coil 110a of the motor 110, so that the coil 110a is cooled also in this way.

In the above-explained scroll-type compressor, coil 110a of motor 110 is heated when the motor is driven, but when the refrigerant gas sucked through the suction pipe 182 is drawn via the suction hole 115 into the enclosed spaces 124, the refrigerant gas also passes around the motor 110, thereby cooling the motor 110.

If the refrigerating load is decreased and thus the amount of circulation of the refrigerant gas becomes smaller in the driving condition, the amount of suction of the refrigerant gas is also decreased. However, the refrigerating machine oil is discharged and supplied to the lower portion of the coil 110a, so that this lower portion is cooled and it is possible to prevent the motor 110 from overheating.

## Claims

1. A fluid machine comprising:
a stator (110b);
a rotation shaft (105);
a rotor (110c) which is fixed to the rotation shaft and rotates according to the rotation of the rotation shaft; and
an oil filler path, provided in the rotation shaft, through which lubricating oil flows, and
the fluid machine characterized in that the oil filler path has a stator opening (155c) which faces the stator.

2. A fluid machine as claimed in claim 1, characterized in that the oil filler path includes:
a first path (152) for supplying the lubricating oil to a bearing of the rotor; and
a second path (155), having the stator opening (155c) which faces the stator, for supplying the lubricating oil to the stator.
